Europäisches Patentamt

European Patent Office

Office européen des brevets

(11) Publication number: 0 324 973 A1

# EUROPEAN PATENT APPLICATION

(21) Application number: 88121647.7

(22) Date of filing: 24.12.88

(51) Int. Cl.4: B01D 27/08

(30) Priority: 29.12.87 IT 2325487

(43) Date of publication of application:
26.07.89 Bulletin 89/30

(84) Designated Contracting States:
AT BE CH DE ES FR GB GR IT LI LU NL SE

(71) Applicant: FIAAM FILTER S.P.A.
Via V. Barbieri 1
I-46100 Mantova(IT)

(72) Inventor: Giroldi, Angelo
Via Podgora 28
I-46030 Virgilio (Mantova)(IT)

(74) Representative: Modiano, Guido et al
MODIANO, JOSIF, PISANTY & STAUB
Modiano & Associati Via Meravigli, 16
I-20123 Milan(IT)

(54) Oil filter head for internal combustion engines.

(57) The oil filter head (12) for internal combustion engines is adapted to be fixed by seaming to a container containing a filtering element and having defined therein a space between the container and the filtering element. The oil filter head comprises a monolithic head element having formed therein a threaded axial connection (12c) for communication with an engine, a circumferential sealing gasket containment groove (12d), and at least one substantially annular surface located between the axial connection and the circumferential sealing gasket containment groove. The annular surface has formed therein a plurality of holes (12b) adapted for communicating an oil sump with the space defined between the container and the filtering element, and is inclined towards the axial connection (12c).

Fig. 3

## OIL FILTER HEAD FOR INTERNAL COMBUSTION ENGINES

The invention relates to an oil filter head for internal combustion engines.

As known, widespread use is made of oil filters in the field of internal combustion engines, particularly in motor vehicles, for the filtering of the lubricating oil thereof.

Said filters comprise a container adapted to contain a filtering element, closed at the top by a head which is typically provided with a threaded axial connection adapted to be connected to the engine, and with a plurality of holes adapted to connect the oil sump to the portion of space comprised between the container and the filtering element.

When the filter is not positioned with the head directed downwards, since in this case an anti-drainage valve must be present, a spacer element is interposed between said head and the filtering element which prevents the direct communication of the plurality of holes with the axial connection; in this manner the oil arriving from the sump enters the filter under pressure and is guided by a spacer element, to flow outside the filtering element to pass through it converging in the central region, from where it exits by means of the axial connection towards the motor.

According to the prior art, the head of the filter is provided by welding two components obtained by press-forming, i.e. a large plate provided with the plurality of holes and the axial connection described above, and a seaming plate at the periphery of said large plate, which comprises a groove for the containment of a gasket and has the outer edge curved to be associated by plastic deformation with the upper edge of the container upon seaming.

The process for the obtainment of the head according to the prior art thus entails a considerable number of processing steps and heavy use of machines and labour: after the press-forming of the two components, in fact, it is necessary to connect them by welding, paying attention to particular geometric and shaping characteristics, such as for example perfect orthogonality and concentricity of the axis of the threaded connection present in the large plate with respect to the outer edge of the seaming plate. It is immediately apparent that the operation requires a great deal of care and considerable time.

It must be furthermore borne in mind that the junction between the large plate and the smaller plate must have a seal against possible infiltrations of oil, and therefore the prior art entails an operation, called "puttying", which consists of the application of a thread of putty between the surfaces of the two components in contact.

Furthermore, when the filter has a spacer element between the head and the filtering element, it is necessary to consider the need for further operations during obtainment of said element and the positioning thereof, with additional costs which represent an all but negligible percentage on the total cost of the filter.

The aim of the present invention is to provide an oil filter head for internal combustion engines, which is easy to manufacture and which allows the elimination of the spacer element, if the latter is necessary for the functionality of the filter.

Within the above-described aim, an object of the invention is to provide an oil filter head which is also economically advantageous and reliable in use.

The proposed aim and object, as well as other objects which will become apparent hereinafter are achieved by an oil filter head for internal combustion engines, as defined in claim 1.

Advantageously, the head comprises a circumferential protrusion at the portion comprised between the axial connection and the gasket containment groove, adapted to make contact with the surface of the filtering element directed towards the head, so as to perform the function of spacer element.

Further characteristics and advantages of the invention will become apparent from the description of two preferred but not exclusive embodiments of the invention, illustrated only by way of non-limitative example in the accompanying drawings, wherein:

figure 1 is a fragmentary cross sectional view taken on a diametral plane, of an oil filter head according to the prior art ready to be fixed to a container, and separated from the filtering element by means of a spacer;

figure 2 is a partial cross sectional view taken on a diametral plane, of an oil filter head according to the invention;

figure 3 is a partial cross sectional view taken on a diametral plane, of an oil filter head according to another aspect of the invention;

figure 4 illustrates the sequence of manufacturing steps for obtainment of the oil filter head according to the invention.

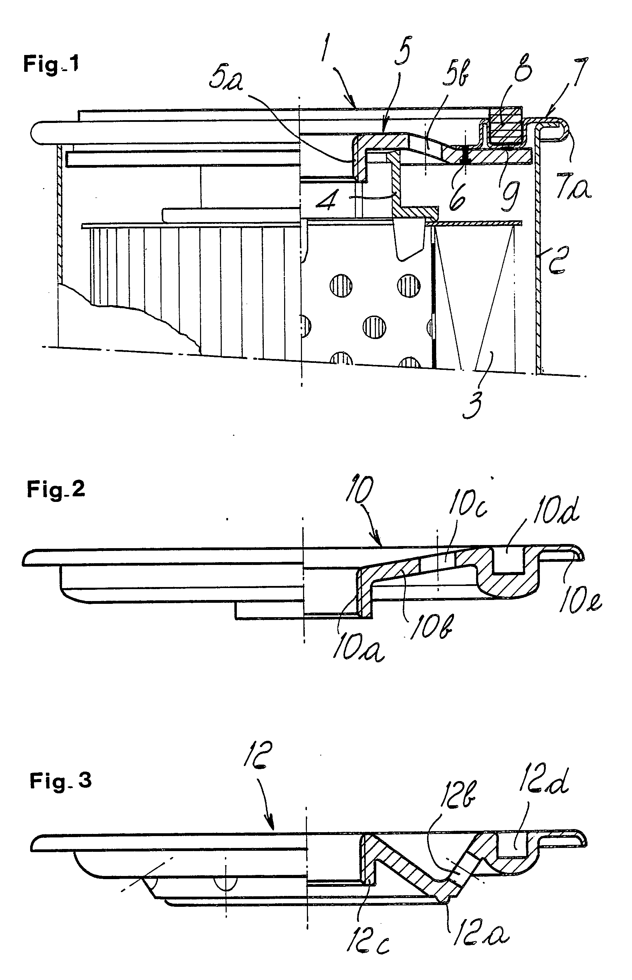

With reference to the above described figure 1, an oil filter head according to the prior art is generally indicated at 1, assembled and ready to be fixed to a container 2 containing the filtering element 3, separated from said head by means of the spacer 4 which, as described, may be replaced with an anti-drainage valve, if the filter is arranged with the head inclined downwards.

Said head 1 comprises the large plate 5 provided with a threaded axial connection 5a adapted to be connected to the engine, and with a series of holes 5b having axes distributed along a circumference, and being adapted to connect an oil sump to a portion of space comprised between the container 2 and the filtering element 3; thus the oil arriving from the sump enters the filter through the holes 5b and, guided by the spacer element 4 which prevents a direct bypass to the connection 5a, flows around the outside of the filtering element 3, the oil then passes through the filtering element under pressure, and moves towards the engine to perform its lubricating function, passing through the axial connection 5a which is associated, by means of an adapted threaded nipple, with said engine.

The seaming plate 7 is connected to the large plate 5 by means of welds 6, and comprises a circumferential groove for the containment of the sealing gasket 8 and the curved edge 7a adapted to be clamped and further folded during the step of seaming to the upper end of the container 2; a thread of putty 9 is interposed between the large plate 5 and the seaming plate 7 to ensure the anti-emptying seal of the head.

As previously mentioned, it is difficult to manufacture such a head because of the large number of operations to be performed with considerable precision. This problem is overcome by the invention, which provides an oil filter head of the type now described, with reference to figure 2 which illustrates a head adapted to be mounted on a filter typically provided with an anti-drainage valve between said head and the filtering element.

Said head, which is generally indicated at 10, is manufactured monolithically with the sequence of operations which will be described hereinafter, and comprises an axial connection 10a for communication with the engine, a portion defining a conical surface 10b inclined towards the axial connection 10a and having formed therein a plurality of holes 10c for communication with the oil sump, a circumferential groove 10d for accommodating a sealing gasket, and a folded edge 10e for seaming to a container.

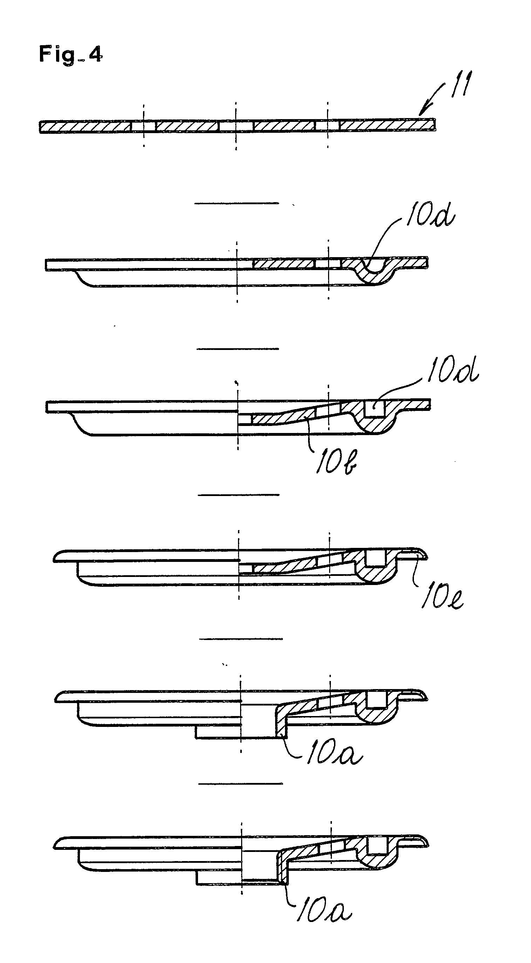

The steps required to manufacture the plate will now be described with reference to figure 4, starting from the semi-worked element constituted by the punched and perforated disk 11.

The first step is the roughing of the groove 10d, to continue in a successive step with the coining of said groove and the conical surface 10b; peripheral coining is then performed for obtaining a folded edge 10e, together with a simultaneous general restriking of the product, and the folding of the axial connection 10a is then provided, all this is achieved through ordinary press-forming operations.

The thread of the connection 10a is then obtained by rolling at the end of the pressing, and the operation of extraction from the die finally follows.

As immediately apparent, the productive process with which the head according to the invention is provided with respect to the prior art is greatly simplified; it is then obvious that the head itself has no sealing problems, and furthermore ensures characteristics of geometrical and shaping precision which are required for correct operation, such as orthogonality and concentricity of the connection 10a relatively to the edge 10e.

Figure 3 illustrates a head 12, also provided monolithically, adapted to be mounted on a filter which does not have an anti-drainage valve between the head and the filtering element, and which is shaped so as to also perform the function of spacer element, thereby allowing the elimination of said spacer element.

Said head in fact has the circumferential protrusion 12a in the conical region provided with the holes 12b comprised between the axial connection 12c and the circumferential groove 12d, which is adapted to make contact with the surface of the filtering element directed towards the head, and is therefore capable of performing also the function of spacer element which in the prior art is performed by a separate element such as that indicated by the reference numeral 4 of figure 1, which therefore, as mentioned, can be eliminated in the oil filter head, according to the invention.

The high degree of functionality of the head 12, which can be obtained with a press-forming process like the one described for the provision of the head 10, is thus apparent.

The described invention is susceptible to numerous modifications and variations, all within the scope of the inventive concept, and all the details can be replaced with technically equivalent elements. In carrying out the invention, any materials and shapes may be used.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Oil filter head for internal combustion engines, adapted to be fixed by seaming to a container containing a filtering element and having defined therein a space between the container and the filtering element, said oil filter head comprising a monolithic head element having formed therein a threaded axial connection for communication with an engine, a circumferential sealing gasket containment groove, and at least one substantially annular surface located between said axial connection and said circumferential sealing gasket containment groove and having formed therein a plurality of holes adapted for communicating an oil sump with the space defined between the container and the filtering element, characterized in that said at least one substantially annular surface is inclined towards said axial connection.

2. Oil filter head according to claim 1, characterized in that it further comprises a second inclined substantially annular surface located between said axial connection and said at least one substantially annular surface.

3. Oil filter head according to claims 1 and 2, characterized in that it further comprises at least one circumferential protrusion rigidly associated with said at least one substantially annular surface and said second inclined substantially annular surface.

4. Oil filter head according to claim 3, characterized in that said circumferential protrusion is adapted to make contact with the surface of the filtering element directed towards the head, so·as to perform the function of spacer element.

5. Oil filter head according to claim 1,2, or 3, characterized in that said at least one substantially annular surface is a substantially conical surface.

6. Oil filter head according to claim 2 or 3, characterized in that said second inclined substantially annular surface is a substantially conical surface.

Fig.1

Fig.2

Fig.3

**Fig_4**

11

10d

10d

10b

10e

10a

10a

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 314 903  (W. HANLEY)<br>* Columns 1-6 *<br>--- | 1,2,5,6 | B 01 D  27/08 |
| A | US-A-3 616 933  (J.A. BALDWIN)<br>* Columns 1-6 *<br>--- | 3,4 | |
| A | FR-A-1 338 141  (FILTERWERK MANN & HUMMEL)<br>----- | | |

TECHNICAL FIELDS
SEARCHED (Int. Cl.4)

B 01 D

The present search report has been drawn up for all claims

| Place of search | Date of completion of the search | Examiner |
|---|---|---|
| THE HAGUE | 09-04-1989 | DE PAEPE P.F.J. |

EPO FORM 1503 03.82 (P0401)